(19)

Europäisches Patentamt
European Patent Office
Office européen des brevets

(11) **EP 4 095 957 A1**

(12) **EUROPEAN PATENT APPLICATION**

(43) Date of publication:
**30.11.2022 Bulletin 2022/48**

(21) Application number: **21305708.6**

(22) Date of filing: **27.05.2021**

(51) International Patent Classification (IPC):
*H01M 8/04298* [(2016.01)]   *H01M 8/04537* [(2016.01)]
*H01M 8/04664* [(2016.01)]   *H01M 8/04992* [(2016.01)]
*H01M 8/0432* [(2016.01)]

(52) Cooperative Patent Classification (CPC):
**H01M 8/04305; H01M 8/04544; H01M 8/04574;**
**H01M 8/04604; H01M 8/04664; H01M 8/04992;**
H01M 8/0432; H01M 2250/20

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **TOYOTA JIDOSHA KABUSHIKI**
**KAISHA**
**Toyota-shi, Aichi-ken 471-8571 (JP)**

(72) Inventors:
• **STORMS, Ward**
 **1140 BRUSSELS (BE)**

• **CLARET-TOURNIER, Julien**
 **1140 BRUSSELS (BE)**
• **TSIBERIDIS, Nicolas**
 **1140 BRUSSELS (BE)**

(74) Representative: **Cabinet Beau de Loménie**
 **158, rue de l'Université**
 **75340 Paris Cedex 07 (FR)**

Remarks:
Amended claims in accordance with Rule 137(2) EPC.

(54) **METHOD FOR DETECTING A POSSIBLE ANOMALY IN THE OPERATION OF A FUEL CELL AS A POWER SOURCE OF A MOBILE OR STATIONARY SYSTEM**

(57)     A method for detecting a possible anomaly in the operation of a fuel cell (FC) as a power source of a mobile or stationary system (10; 10'), the FC being configured to generate a current (I) and a voltage (V) that are linked through a polarization curve (I-V). The method comprises:
- collecting (S5, S20) current (I) data and associated voltage (V) data of the FC during current operation of the FC corresponding to a current period of time,
- comparing (S7, S22) currently collected current (I) data and associated voltage (V) data with a threshold (T;K*-$\sigma$; K*+$\sigma$) previously obtained through using a machine learning algorithm together with current (I) data and associated voltage (V) data collected during previous operation of the FC (previous period of time), the machine learning algorithm outputting both (i) a modelled polarization curve (I-V) representing a mean (Mrl) of data points (I,V) corresponding to previously collected current (I) data and associated voltage (V) data and (ii) a variance ($\sigma^2$) of the voltage for a given current based on these data points (I,V), the threshold depending on said variance,
- detecting (S8, S22) a possible anomaly in the operation of the FC depending on the result of the comparison (S7, S22).

**FIG. 3**

EP 4 095 957 A1

## Description

FIELD OF THE DISCLOSURE

The present disclosure concerns a method for detecting a possible anomaly in the operation of a fuel cell as a power source of a mobile or stationary system, a method for assessing the quality of hydrogen supplied at a given hydrogen refuelling station to a plurality of mobile systems based on the detection method, a method for assessing the quality of hydrogen supplied at a first plurality of hydrogen refuelling stations to a second plurality of mobile systems based on the detection method, a system for implementing in whole or in part any of the preceding methods and a mobile or stationary system comprising this system.

BACKGROUND OF THE DISCLOSURE

It is known that fuel cells can be used as power sources or generators in many systems, either mobile systems such as for lifts, vehicles (ex: Fuel Cell Electric Vehicles) such as passenger cars, commercial vehicles (trucks, vans, etc.), boats, trains, etc. or stationary systems such as power generators, backup power supplies, etc..

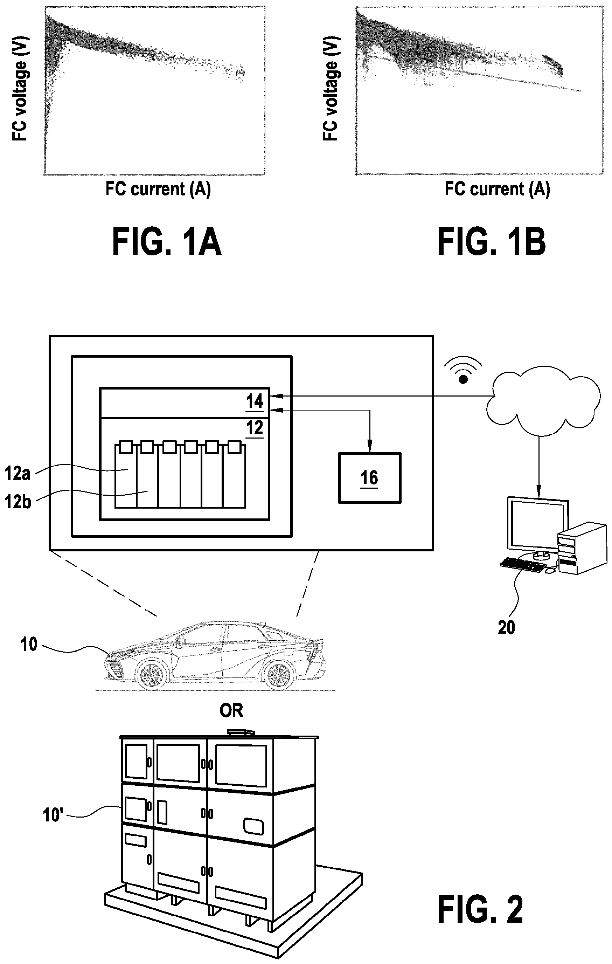

A fuel cell is generally characterized by its polarization curve I-V which establishes a relation between two main parameters of the fuel cell, namely the electrical current I and the associated voltage V which is a dependent parameter of the independent parameter I. An example of a fuel cell polarization curve is illustrated on Figure 1A with some noise around the voltage.

A fuel cell is therefore expected to behave in accordance with the performance provided by its polarization curve during operation of the fuel cell, thereby meaning that the fuel cell is expected to output a given voltage within a certain range of values under a given current.

However, actual operation of a fuel cell may often lead to unexpected voltage values for given current values as shown on Figure 1B.

This can reflect an anomaly or a defect in the operation of the fuel cell and/or in the fuel cell itself and/or in auxiliary systems due to many possible reasons such as contamination in the air intake, contamination in the fueled hydrogen, durability effects including power requests, etc..

EP 1 069 636 B1 describes a method for detecting a fuel cell performance decrease based on monitoring actual current and voltage values, comparing the monitored actual voltage value with the expected voltage value that is obtained through a predetermined lookup table using the monitored actual current value and detecting a performance decrease in case the monitored actual voltage value differs from the expected voltage value.

This method is based on predetermined and expected values and compares the actual fuel cell behavior with a predetermined and expected behavior. However, using predetermined values may either lead to misdetection (false alarm), e.g. due to other parameters which are not taken into account in the model predicting an expected behavior of the fuel cell, or missed discovery (lack of detection), and thus makes this method not flexible enough.

It would thus be desirable to remedy at least one of the above drawbacks.

DISCLOSURE OF THE INVENTION

A purpose of the present disclosure concerns a method for detecting a possible anomaly in the operation of a fuel cell as a power source of a mobile or stationary system that is more flexible (adaptive) to the actual operating conditions of the fuel cell than the prior art methods such as mentioned above. To meet this purpose, the present disclosure provides for a method for detecting a possible anomaly in the operation of a fuel cell fuel cell as a power source of a mobile or stationary system, the fuel cell being configured to generate a current I and a voltage V that are linked through a polarization curve I-V, wherein the method comprises:

- collecting current I data and associated voltage V data of the fuel cell during current operation of the fuel cell corresponding to a current period of time,
- comparing currently collected current I data and associated voltage V data with a threshold that has been previously obtained through using a machine learning algorithm together with current I data and associated voltage V data collected during previous operation of the fuel cell corresponding to a previous period of time, the machine learning algorithm outputting both (i) a modelled polarization curve I-V representing a mean of data points I,V corresponding to previously collected current I data and associated voltage V data and (ii) a variance of the voltage for a given current based on these data points I,V, the threshold depending on said variance,
- detecting a possible anomaly in the operation of the fuel cell depending on the result of the comparison.

The above method is based on modelling a polarization curve I-V of the fuel cell for a previous period of time using a machine learning algorithm which involves previous collected current and associated voltage data and comparing currently collected data with a threshold obtained through this machine learning model. Thus, this method does not involve predetermined values. The machine learning model takes into account actual operation of the fuel cell during the previous period of time and the current behaviour of the fuel cell (during a current period of time) is then compared with a real past fuel cell behaviour, not an expected one. This makes it possible for the method to be very responsive to fuel cell anomalies and avoid misdetection. The present method is more flexible than in the prior art since it defines what is a "normal" fuel cell behaviour based on actual operation of the fuel cell and learning from the latter. No abnormal fuel cell behaviour that has been previously determined or set is used within the frame of the present method. In other words, the above method enables real time assessment of the 'normality' in the operation of the system fuel cell. Further, development resources can be reduced as dedicated testing can be reduced due to the fact that the model is continuously learning, and in particular from actual operation of the FC as it is running. It is to be noted that the machine learning model is dedicated to a fuel cell of a given system and is therefore much more accurate than models which are established for plural fuel cells since, here, it is only representative of this fuel cell actual behaviour based on operation of the latter. In particular, the above-mentioned threshold is specific to a system and cannot be used for another system. This threshold is not fixed in advance since it depends on the variance which varies along with the model that is continuously learning from new collected data (all that has been described above equally applies when using the standard deviation that is the square root of the variance).

According to further possible aspects:

- the threshold is proportional to the variance; for example, a user may set the proportionality coefficient between the threshold and the variance in order to adjust the sensitivity of the model; it is to be noted that a further limit or threshold may be set so as to ensure that an anomaly may be detected for a significant shift in the polarization curve, e.g. not for a single data point below or above the threshold (where the threshold is a lower or an upper limit with respect to the polarization curve I-V); the number of data points I, V that are beyond this further threshold has to be high enough for the shift being significant enough; this further threshold may be selected based on a user desire or a required sensitivity;
- the modelled polarization curve I-V of the fuel cell is updated based on the currently collected current I data and associated voltage V data collected during current operation of the fuel cell; this makes it possible for the model to learn from current operation of the fuel cell and to be automatically updated based on the latter; the updated modelled polarization curve I-V of the fuel cell is therefore representative of the last fuel cell operation, thereby taking into account the last conditions for such an operation (environment, last refuelling, driving behaviour, etc.);
- the machine learning algorithm is based on a mathematical model that is selected among the following: a linear regression model, a multi-variate linear regression model, a polynomial model, a logarithmic model, a generalized linear model;
- the machine learning algorithm being based on a mathematical model involving unknown parameters, a Bayesian Statistical Inference method together with a computational method are used to determine the unknown parameters of the model; instead of using the Bayesian Statistical Inference method, the variance of the voltage can be calculated otherwise, e.g. by discretizing the range of current I in bins, and evaluating the variance of each bin (then a boundary decision using the data points of each bin can be constructed);
- the method further comprises collecting at least one other parameter for modelling a polarization curve I-V of the fuel cell, said at least one other parameter being selected among the following: a duration of operation of the fuel cell, a lifetime of the system, amount of energy produced, environmental properties such as temperature of the air, air relative humidity, quality of the air, behaviour of a user of the system including the fuel cell based on operation of the fuel cell over time;
- when the fuel cell is a power source of a mobile system (ex: a vehicle such as a FCEV), the method further comprises collecting mileage data ODO of the mobile system during operation of the latter and modelling a polarization curve I-V of the fuel cell through further use of collected mileage of the mobile system;
- the collected current I data and associated voltage V data of the fuel cell are those collected during operation of the fuel cell of the mobile system after the last refuelling of the fuel cell with hydrogen H2 at a given hydrogen refuelling station HRS, the collected current I data and associated voltage V data of the fuel cell being related to the given HRS;
- the collected current I data and associated voltage V data of the fuel cell are further related to a geographical location of the given HRS;
- the method further comprises transmitting signalling information indicating an anomaly in the operation of the fuel cell of the mobile system to a user of the mobile system and/or a distant entity; such signalling information may be transmitted to the vehicle dealer, the vehicle manufacturer, the HRS operator, the vehicle owner etc.; switching into a safe operation mode of the fuel cell of the system may also be envisaged (to reduce or avoid damages) in addition to the signalling information transmission or in replacement thereof.

A second purpose of the present disclosure is to propose a method for assessing the quality of hydrogen H2 supplied at a given hydrogen refuelling station HRS to a plurality of mobile systems, wherein the method comprises applying the detection method as briefly described above to each of the plurality of mobile systems, each of the plurality of mobile systems having refuelled with H2 at the given HRS. Thus, when an anomaly is detected in the operation of the fuel cell of each of the plurality of mobile systems (the plurality of mobile systems includes at least two mobile systems and may include many more) thanks to the detection method applied thereto, it can be established that this anomaly originates in the low quality of hydrogen that has been supplied at the given hydrogen refuelling station HRS. This assessment method makes it possible to easily and rapidly assess the quality of H2 supplied at a given hydrogen refuelling station HRS without needing to take and analyse samples at the HRS. In particular, it is thus possible to detect low H2 quality that is delivered at a given HRS. Taking H2 samples at an HRS is much more technically challenging than for regular fuels due to high pressure generally dispensed at the HRS (ex: 700 bars). Further, analysis is also technically challenging due to the complex standard (ISO14687/EN17124) with 14 impurities with a low not-to-exceed limit. Also, the turnover time between sampling and analysis may quite often take 2 months and is rather costly. If no anomaly has been detected it means that the fuel cell is operating properly and the H2 quality can be assumed to be good (i.e. within a predetermined range of values or below a predetermined threshold value based on the standard) as well. It is to be noted that a comparison in the long run (longer term data logging) between the modelled regression lines of vehicles refuelling at the given HRS and the modelled regression lines of other vehicles refuelling at other HRSs may allow to increase the accuracy in the detection of anomalies linked with H2 quality supplied at the given HRS. For instance, this may lead to detecting a difference in the rate of degradation of the fuel cells of the vehicles, in particular an increased rate of degradation in the modelled regression lines of the vehicles refuelling at the same HRS compared with the other ones. This would be representative of a low H2 quality that is difficult to assess or detect after a single trip of the vehicles refuelling at the same HRS. For instance, it could correspond to either slightly higher concentration of impurities than the standard describes or impurities which have lower effects on the fuel cell than other impurities. If only one fuel cell of a vehicle among the plurality of the vehicles leads to detecting an anomaly, then it cannot be determined that the quality of H2 that is supplied at given HRS raises an issue.

According to further possible aspects:

- when the detecting method applied to each mobile system leads to detecting an anomaly in the operation of the fuel cell of the mobile system after the latter has refuelled with H2 at the given HRS, then the detected anomaly is representative of an H2 quality issue associated with the given HRS;
- the method further comprises locating on a map the given HRS with the associated H2 quality issue when applying the above aspect of the detection method wherein the collected current I data and associated voltage V data of the fuel cell are further related to a geographical location of the given HRS.

The collected data of each operating fuel cell of the mobile systems is linked with H2 that has been last refuelled at the given HRS, and therefore is linked to the geographical location of the latter. It is thus possible to locate on a map the given HRS together with the H2 quality issue (ex: low quality).

A third purpose of the present disclosure is to propose a method for assessing the quality of hydrogen (H2) supplied at a first plurality of hydrogen refuelling stations HRSs to a second plurality of mobile systems, wherein the method comprises applying the detection method as briefly described above to each of the second plurality of mobile systems, each of the second plurality of mobile systems having refuelled with H2 at one or more of the first plurality of HRSs. Such an assessment method makes it possible to detect a possible anomaly in the operation of the one or several HRSs of a first plurality of HRSs thanks to a second plurality of mobile systems having refuelled with H2 at one or more HRSs of the first plurality of HRSs and the implementation of the detection method for each fuel cell of the mobile systems.

According to further possible aspects:

- the detecting method applied to each mobile system leads to detecting an anomaly or not in the operation of the fuel cell of the mobile system after the latter has refuelled with H2 at an HRS of the second plurality of mobile systems, depending on the result of the comparison;
- when the detecting method applied to two or more of the second plurality of mobile systems leads to detecting an anomaly in the operation of the fuel cell of each mobile system after each of them has refuelled with H2 at the same HRS, then the detected anomaly is representative of an H2 quality issue associated with this HRS; generally, it is indicative of a low H2 quality;
- when the detecting method applied to a given mobile system of the second plurality of mobile systems that has refuelled with H2 at all the HRSs of the first plurality of HRSs leads to detecting an anomaly in the operation of the fuel cell of the given mobile system, then it can be determined/judged that the anomaly detected in the operation of the fuel cell of the given mobile system relates either to the fuel cell itself or to the given mobile system itself and not to an H2 quality issue; in addition, the detecting method that may have also been applied to the other mobile systems of the second plurality of mobile systems having refuelled at all the HRSs may either lead to not detecting any anomaly in the operation of the fuel cell of each of these other mobile systems or lead to detecting an anomaly in the operation of the fuel cell of each of these other mobile systems in connection with a given HRS; in the latter case, a low H2 quality may be detected in connection with this given HRS;
- when applying the above aspect of the detection method wherein the collected current I data and associated voltage V data of the fuel cell are further related to a geographical location of the given HRS, the assessment method further comprises locating on a map each HRS of the first plurality of HRSs with for each of them an indication of an H2 quality issue or an indication of no H2 quality issue; then a mapping of the first plurality of HRSs with an associated H2 quality indication for each of them can be established;

- the method further comprises transmitting signalling information including an indication of an H2 quality issue or an indication of no H2 quality issue for one or more HRSs of the first plurality of HRSs; such signalling information may be transmitted to the vehicle dealer, the vehicle manufacturer, the HRS operator, the vehicle owner etc.; switching into a safe operation mode of the fuel cell of the system may also be envisaged (to reduce or avoid damages) in addition to the signalling information transmission or in replacement thereof. Any of the above-mentioned features, aspects and advantages described in relation with the detection method also applies to the above assessment methods according to the second and third purposes and will not be repeated. It can be noted that the above assessment methods according to the second and third purposes make also possible to detect anomalies in the operation of the fuel cell of one or more mobile systems (ex: vehicles) and that are not linked with H2 quality but originate in the fuel cell itself.

In this respect, a further purpose of the present disclosure is to propose a method for detecting an anomaly in the operation of the fuel cell of one or more mobile systems of a plurality of mobile systems that can refuel or have refuelled with H2 at a plurality of HRSs. The method in accordance with this further purpose is based on applying the above detection method (as briefly described above for a single mobile system) to each of the plurality of mobile systems.

Another purpose of the present disclosure is a system for implementing or performing any of the above detection methods or any of the above assessment methods. The implementation/performance system for implementing or performing any of the above detection methods may be, either embedded in whole in a mobile or stationary system, or partly in a mobile or stationary system and partly in a remote device, entity or system (ex: server).

Still another purpose of the present disclosure is a mobile or stationary system comprising such an implementation/performance system.

The implementation/performance system for implementing or performing any of the above assessment methods may be embedded either partly in a mobile or stationary system and partly in a remote device, entity or system (ex: server) or in whole in a remote device, entity or system (ex: server).

## BRIEF DESCRIPTION OF THE DRAWINGS

The present invention may be better understood and its numerous other objects and advantages will become apparent to those skilled in the art by reference to the accompanying drawings wherein like reference numerals refer to like elements in the several figures and in which :

Figures 1A and 1B are respective schematic representations of a prior art fuel cell polarization curve without anomaly (fig. 1A) and with an anomaly (fig. 1B); Figure 2 is a schematic representation of a system (either mobile or stationary) including a fuel cell according to an embodiment of the present disclosure;

Figure 3 is a schematic representation of an algorithm of a detecting method according to an embodiment of the present disclosure;

Figure 4 is another schematic functional representation of steps of a detecting method according to an embodiment of the present disclosure;

Figures 5A and 5B are schematic representations of principles underlying the establishment of a possible model for a fuel cell polarization curve;

Figure 6 illustrates a possible modelled polarization curve together with a possible decision boundary (threshold T);

Figure 7 illustrates the result of detection of certain anomalies after operating a FCEV, as FCEV 10 of Figure 2, a number of times;

Figure 8 is a schematic representation of an example of a map locating a plurality of HRSs in a geographical area;

Figure 9 is a schematic representation of an algorithm of an assessment method according to an embodiment of the present disclosure.;

Figure 10 illustrates the results of anomaly detection and H2 quality assessment performed on a plurality of FCEVs in connection with another plurality of HRSs;

Figures 11 and 12 illustrate different possible data visualization with maps (Figure 11) and dashboard (Figure 12).

## DESCRIPTION OF PREFERRED EMBODIMENTS

The present embodiment applies to a mobile system including a fuel cell (FC) as a power source or power generator and which uses hydrogen (H2) as fuel. A "fuel cell" may be understood as comprising a single or individual cell or component and may also be a fuel cell stack which comprises a plurality of individual fuel cells, generally a great number thereof, that are connected in series. The fuel cell is thus an energy source for the propulsion of the mobile system. The mobile system may be here an electrical vehicle (ex: FCEV) which can be a passenger car, a commercial vehicle (truck, van, etc.), a boat, a train, etc. Alternatively, other mobile systems can be envisaged such as lifts, etc.

In another embodiment, a stationary system including a fuel cell (FC) as a power source or power generator is considered. Such a stationary system may be a power generator, a backup power supply, etc.

The following description concerns mobile systems but also applies to stationary systems (as long as the description does not involve features relating to the mobility of the system such as the mileage data, the distance travelled by the system, etc.). The fuel cells that are used in both types of systems may be the same and, as a general manner, deliver power to a consumer.

The electrical current I and associated voltage V generated by a fuel cell of an electrical vehicle (FCEV) have generally a linear relationship which is known under the term 'polarization curve', also called I-V curve, of which the shape is that of Figure 1A. More particularly, the relationship between I and V is linear once the data points (I, V) at very low load (small current values) are excluded from the regression line.

The inventors have noted that each I-V curve is specific to each FCEV and the linear relationship between I and V is different from one FCEV to another. In particular, there is a significant variability of the I-V regression lines of several FCEVs, which tends to increase for higher current values.

Such a variation may originate in the mass production variation of the FC components, the driving behavior, the environmental conditions (temperature, humidity, air pollution, etc.). Also, the mobile system mileage may significantly impact the I-V curve.

Given the above context, the inventors have modelled a polarization curve (I-V) of a FCEV through using a machine learning algorithm together with current I data and associated voltage V data, as well as mileage data (ODO) that are collected in the course of operation of the FCEV. For a stationary system mileage data (ODO) will not be a relevant parameter.

The machine learning algorithm automatically outputs both (i) a modelled polarization curve (I-V) representing a mean/average (regression line) of the data points (I, V) corresponding to previously collected current I data and associated voltage V data as well as mileage data ODO and (ii) a variance (or standard deviation which is the square root of the variance) of the voltage for a given current for all these data points (I, V).

The modelled polarization curve (I-V) is based on actual operation of the FCEV and is therefore continuously trained on data collected during actual operation of the latter (such as CAN data recorded on board the vehicle) such that the model is continuously learning from its operation. This modelled polarization curve with the variation of the data points (variance) is reflecting (or representative of) the condition in which the fuel cell can be regarded as standard (this standard or normal behaviour of the fuel cell is not predefined as it is learnt from the fuel cell operation). The model is impacted by different parameters (these parameters are intrinsically taken into account in the model, which makes it very sensitive and representative of real use or operation of the mobile system) that are inherent to the use or operation of the FCEV, such as:

- vehicle characteristics (mass production tolerances, etc.; the vehicle properties are affecting the power request to the fuel cell);
- the fuel cell characteristics or properties;
- the driving behaviour of the vehicle (depending on this behaviour the power request to the FC will vary: if a driver of the vehicle is driving aggressively, the FC degradation or voltage drop over time is more severe and more rapid than with a moderate driver; the driving behaviour is captured in the model, and therefore intrinsically estimated by the model, through a change in the fuel cell output, i.e. I, V data points and spread of the latter, over the vehicle mileage);
- the vehicle mileage (the FC degradation or voltage drop may differ from one vehicle to another and, for most of the vehicles, the amplitude of the FC degradation or voltage drop is increasing with the travelled distance);
- the environmental properties that affect the environment of the vehicle, in particular during its use or operation (average temperature, air quality, air relative humidity, etc.; in particular, if a vehicle is operated in high altitude, the FC performance will be different from operation of the latter at sea level), etc.

It is to be noted that the vehicle mileage is a parameter that can be easily monitored during operation of the FCEV unlike other parameters or properties that impact the polarization curve (environment, driving behaviour etc.) and that are less easily obtainable (technical difficulties, costs, accuracy, etc.).

Taking account of all the above parameters that are inherent to the use or operation of the FCEV, there is very little risk in misdetection (false alarm or false positive) or missed discovery (lack of detection or false negative) when using this model.

The inventors have implemented this model within the frame of an anomaly detection method that will now be described with reference to Figures 2 and following.

The FCEV 10 including a FC 12 (here composed of a stack of individual fuel cells 12a, 12b etc.) is very schematically illustrated in Figure 2 and may comprise a controller 14 which acts as an electronic central processing unit (ECU) capable of executing a control program using data stored in a memory 16. The controller 14 may control the performance of an anomaly detection method in accordance with the present embodiment and be configured in this respect. The controller may be a dedicated controller (dedicated electronic component or circuit) specific to the above function or implemented in software stored in a vehicle electronic control module.

The controller may further control the operation of the fuel cell 12.

Alternatively, the performance of the above detection method may be remotely controlled, i.e. outside the vehicle or mobile system 10. For instance, data that is collected during operation of the FCEV is transmitted, through a communication unit not represented, to a distant entity 20 (either physical or virtual) which possesses the processing and memory.capacities for performing/implementing (or is configured to perform/implement the different steps of) such control/detection method (ex: a server). Alternatively, a stationary system including a fuel cell may be constituted and operated as described above.

All the above description in relation with an example of mobile system 10 applies likewise to a stationary system such as the system 10' illustrated in Figure 2.

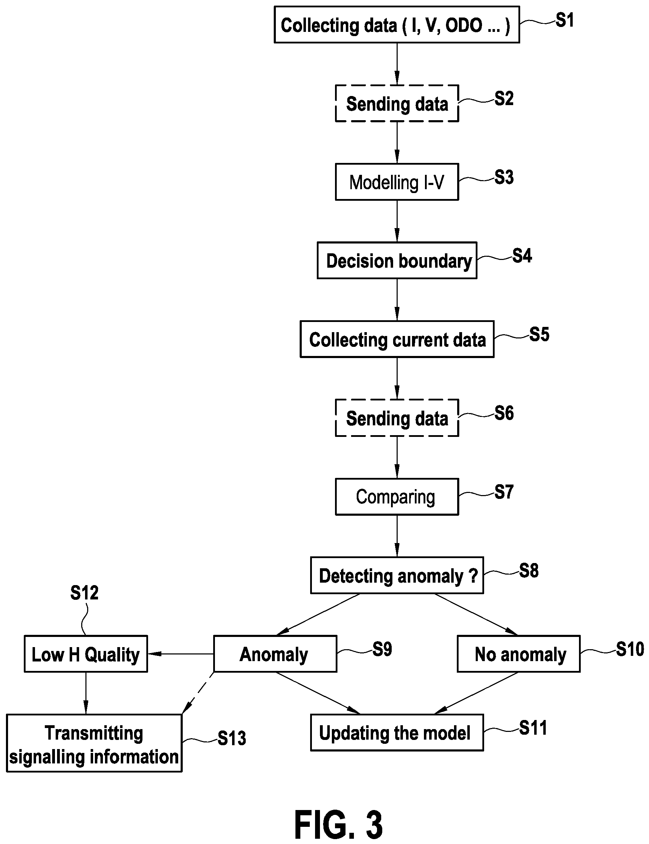

An anomaly detection method in accordance with the present embodiment is schematically illustrated in Figure 3 through an algorithm comprising several steps, the performance of which implements the method.

This method may be performed by the FCEV 10 in whole or in part. The steps that are not carried out by FCEV 10 may be performed by a distant entity (centralised system). In an embodiment the results obtained by the model which will be described below are sent to a distant entity (ex: Internet cloud) as well as HRS location data, whereas the steps that analyse the collected data to determine whether there is an anomaly in the FC operation or not are performed by the FCEV or more generally by a mobile system.

The method starts with a first step S1 for collecting data in the course of operation of the FCEV, such as the current data I and associated voltage data V of the fuel cell as well as the mileage data (ODO). In the present embodiment no other data is collected during the FCEV operation. However, in a variant embodiment, other possible data may be collected improve the accuracy of the FC polarization curve such as vehicle data (speed etc.), air humidity, air temperature, altitude etc.

The performance of the FC may be monitored during driving of the vehicle (or operation of the stationary system) through data collection, in particular by monitoring or tracking the current and voltage data as well as the mileage data of the FCEV continuously or on a periodical basis (data sampling is periodically performed, e.g. every second). Collected data may also be recorded regularly in the course of operation of the FCEV.

In a possible second step S2 (indicated in dashed lines) collected data is sent outside the vehicle, e.g. to an Internet cloud or a distant physical entity, for being subsequently processed. This sending may be done during operation of the FCEV or after (ex: after each trip).

Otherwise, collected data is processed inside the vehicle thanks to the above processing capabilities of the controller.

In the present embodiment the detection method applies to a mobile system, in particular a FCEV of which the FC uses hydrogen for its operation (propulsion system).

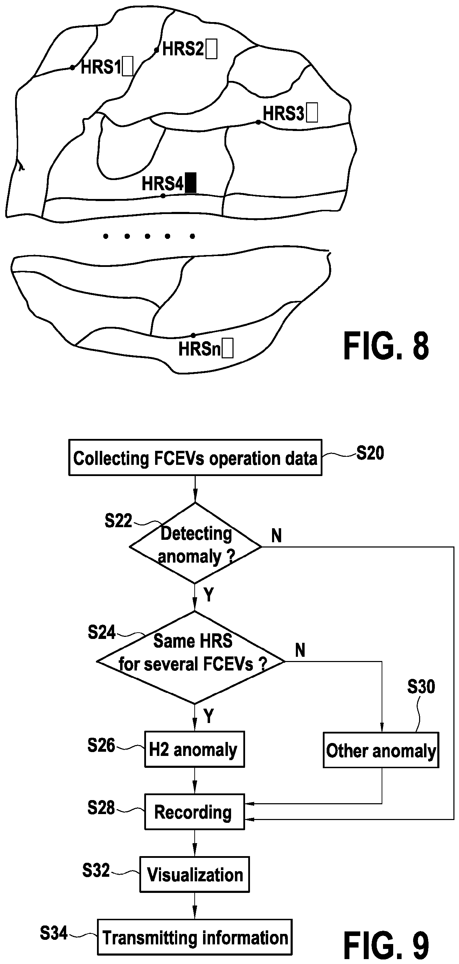

When the vehicle refuels with hydrogen at a given HRS (Hydrogen Refuelling Station), the geographical or GPS coordinates of the latter are recorded (GPS data) so that subsequent use of this supplied hydrogen through operation of the fuel cell will be associated with the location data of this HRS. The vehicle refuelling state can be traced by the tank state of charge CAN (Controller Area Network) signal on board the vehicle or a combination of tank pressure and temperature to calculate the tank state of charge. Based on this signal, it can be automatically defined if the vehicle has been refuelled: the tank state of charge of the new trip will be larger than at the end of the previous trip. If it is the case, the GPS location of the start of the new trip (i.e. location of the HRS where refuelling has been done) is automatically recorded. To be noted that HRS location data can be sent in step S2 or, alternatively, sent separately from collected operation data. HRS location can then be visualized in a dashboard or on a map as shown in Figure 8 where several HRSs at which a plurality of vehicles have refuelled (as vehicle 10) are represented (HRS1, HRS2, HRS3, HRS4, ..., HRSn).

The method comprises a further step S3 for modelling a polarization curve of the fuel cell (characterization of the polarization curve) using collected data and a machine learning algorithm which, in the present case, involves a multi-variate linear regression mathematical model. Alternatively, the mathematical method which the machine learning algorithm uses may be a linear regression model, a polynomial model, a logarithmic model, a generalized linear model etc. To be noted that the present description applies both to mobile and stationary systems. The ODO parameter is suppressed for a stationary system and can be replaced with the amount of hours of operation as an input parameter to the model. Also, the driving behaviour, the travelled distance etc. do not apply to a stationary system.

In particular, the machine learning algorithm uses a mathematical model involving unknown parameters or factors as will be described later. A Bayesian statistical inference method based on probability may be used together with a computational method in order to determine or estimate the unknown parameters or factors.

This leads both to a modelled polarization curve representing a mean or average ("mean line') of data points (I, V) and a variance $\sigma^2$ of the voltage V for a given current I based on these data points. This variance $\sigma^2$ or standard deviation (standard deviation is equal to the square root of the variance) corresponds to the spread of the data points.

More particularly, the model has two inputs, namely the current I and the vehicle mileage ODO and one output V.

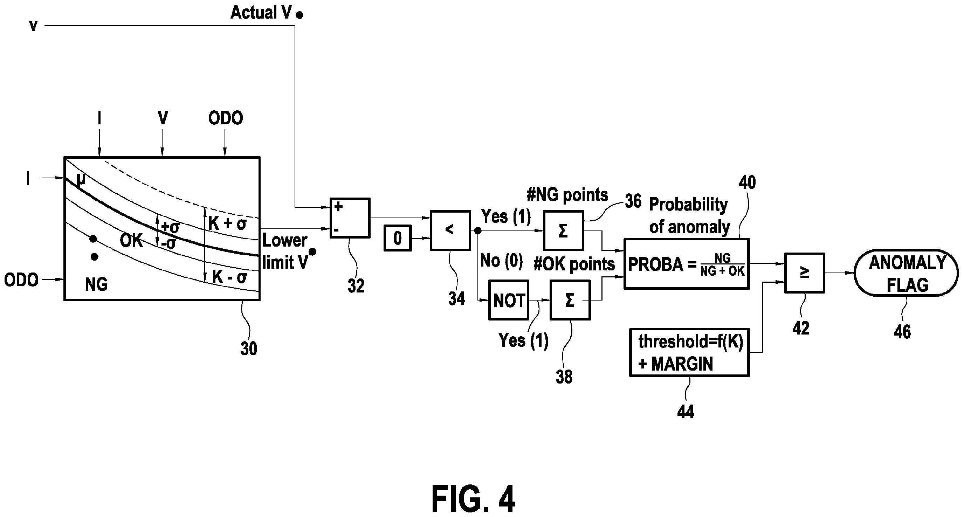

Figure 4 illustrates under another form the main steps of the anomaly detection algorithm and shows, more particularly in the left-hand part box labelled 30, the shape of the modelled polarization curve with the mean line $\mu$ and the standard deviation $+\sigma$ and $-\sigma$ on either part of the mean line. The box 30 schematically represents the outputs of the model learned with data from previous periods of operation (ex: previous data trips) of the FC.

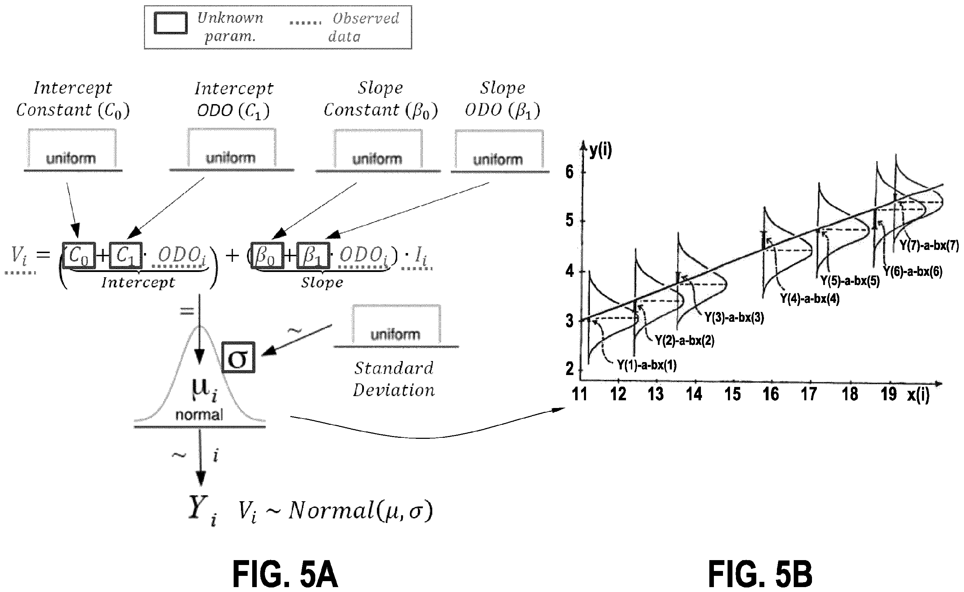

Figures 5A and 5B schematically illustrate the principle underlying the modelling of the polarization curve through the establishment of a generative model of multi-variate linear regression although other methods can be used alternatively.

The equation shown in Figure 5A represents a linear relationship between different parameters ('i' represents every single sample data point):

- the outcome of the equation is the voltage $V_i$ that comes from Normal distributions that share the same standard deviation $\sigma$ but have different $\mu$ : $V_i$ is proportional to $Normal(\mu_i, \sigma)$, i.e. the voltage is distributed as Normal distribution with expected mean value $\mu_i$ and standard deviation $\sigma$; the choice of Normal distribution conforms to the homoscedasticity assumption of linear regression that the residual errors should be normally distributed (homogeneity of variance); Figure 5B illustrates such Normal distributions for values $Y(i)$;
- $\mu_i$ depends on the explanatory (input) variables $I_i$ and $ODO_i$ via the equation $\mu = Intercept + Slope * I_i$.

The above equation uses the following terms:

$$Intercept = C0 + C1.ODO_i,$$

where:

C0 describes the intercept value at ODO=0 and 1=0,
C1 describes the influence of ODO on the Intercept,
and Slope = B0 + B1.0DOi
where:

B0 describes the dependency of voltage V on current I, when ODO=0,
B1 describes the influence of ODO on the Slope.

The above presented model involves 5 unknown parameters:

- C0, C1, BO, B1,
- $\sigma$ (standard deviation),

which are all represented with initial estimated probability distributions, called "prior distributions". Any distribution type can be used to model the priors. In the present case, uniform distributions for C0, C1, B0, B1 and $\sigma$ (to simply represent the plausible range of values expected for the parameters) were used. Alternatively, normal or logarithmic distributions could be used.

The above-mentioned unknown factors which characterize the polarization curve need to be determined or estimated using a computational method.

In the present embodiment the selected computational method may be the Markov Chain Monte Carlo (MCMC) which computes the Maximum Likelihood Estimate, i.e. the combination of parameters that most likely give rise to the observed data. However, other methods for sampling from high-dimensional distributions may alternatively be used: No-U-Turn Sampler, random walk Metropolis, Gibbs Sampling or Hamilton Monte Carlo.

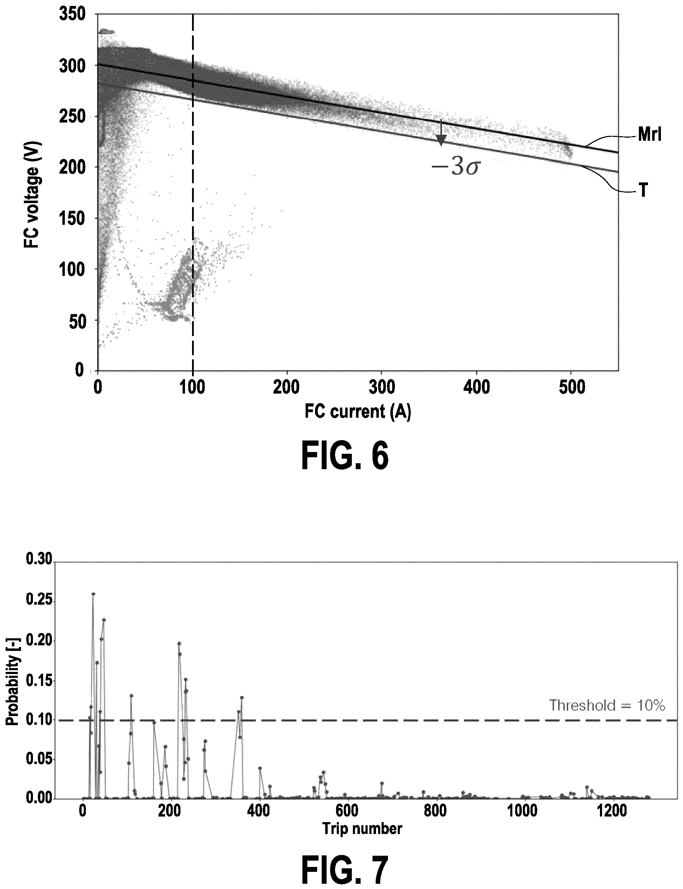

Thus, solving the above equation leads to determining or estimating the unknown factors and obtaining the mean regression line (mean/average of data points (I, V)) and the spread of the data by means of standard deviation (variance of the data points (I, V)). An example of the mean regression line Mrl is illustrated in Figure 6.

In the present embodiment the variance is assumed to be constant over the vehicle mileage. However, in a variant embodiment, the variance may vary (due to the flexibility of the model) if it is deemed necessary (since it can be impacted by external properties).

In a general manner, the method makes it possible to learn automatically the 'normal' or 'mean' behaviour of the fuel cell from operation of the latter and from the data collected in the course of its operation (the 'normal' or 'standard' behaviour or level of the fuel cell is defined by the fuel cell properties, the vehicle mileage (degradation due to durability) and driving behaviour for a FCEV). As will be further explained below, the method also makes it possible to learn anomalous conditions by itself (i.e. without having recourse to a predetermined threshold), by identifying behaviours that significantly differ from the rest of the data.

Once the 'normal' behaviour of the fuel cell voltage output as a function of the current and the mileage has been modelled through this polarization curve and data spread as explained above (see the model outputs in box 30 of Figure 4), it will now be possible to detect possible anomalies in the operation of the fuel cell that lead to lowering the voltage output.

In this respect, the Figure 3 method comprises a further step S4 of defining a threshold or decision boundary based on the mean of data points outputted by the model. This will make it possible to judge, based on the position of subsequent collected data points with respect to this threshold, whether the new data points are normal (i.e. representative of a normal FC behaviour) or abnormal (i.e. representative of an abnormal FC behaviour).

The threshold may be defined here as proportional to the variance obtained through the model and is specific to the vehicle. The threshold may be set to, e.g. $-3\sigma$ from the mean regression line Mrl, as referenced T in Figure 6. This threshold value is set based on a normal data distribution according to which it is considered that for a normal data distribution, only 0.03% of the recorded data points (I, V) should fall below this threshold value. It is to be noted that the threshold value may be set differently by the user depending on the goal to be achieved: higher shift from the mean regression line Mrl will result in fewer anomaly detections by the algorithm, which will also result in increasing the amount of False Negatives (=missed discoveries). More data points will be considered as being 'normal' (between the two lines). In contrast, lower shift from the mean regression line Mrl will result in more anomaly detections by the algorithm, which will also result in increasing the amount of False Positives (=false alarms).

Less data points will be considered as being 'normal' (between the two lines). The mean regression line Mrl is automatically adjusted by the model for each vehicle and operation of the vehicle. It is continuously changed with the vehicle operation and conditions (e.g. mileage and/or any other relevant parameter). As the threshold depends on the mean regression line Mrl, it is also automatically adjusted. In the box 30 of Figure 4, the threshold has been represented as "K*-σ" or "K*+σ" depending on the position of the voltage values V with respect to the mean regression line, where "K" represents the adjustable factor that can be entered by a user. It is possible in certain conditions that the output V will be higher than expected and the upper threshold may be useful in this respect.

It is to be noticed that the fuel cell is conventionally operated under a warm-up mode in order to heat it up. This is done by increasing the current, which heats up the fuel cell by higher resistive loss. At the same time, the voltage is decreased in order to keep the required power output stable. This results on the IV plot of Figure 6 in data points which are not part of the modelled relationship between I and V. These warm-up data points are then filtered out before modelling the polarization curve and have also to be excluded before applying the above decision boundary to subsequent collected data. Also low current data points are excluded from the data points used for modelling the curve for the same reasons. This is schematically indicated by a vertical dotted line in Figure 6.

In the present embodiment the fuel cell is to be supplied with hydrogen (H2) for being capable of operating and, therefore, providing power or energy to the propulsion system of the vehicle (FCEV).

Hydrogen may be supplied to the fuel cell of the vehicle at one among several possible hydrogen refuelling stations (HRSs) of which the geographical location or GPS coordinates are known or obtained and are recorded (GPS data) (if the HRS location was not previously known, the method makes it possible to discover and register new HRSs) so that subsequent use of this supplied hydrogen through operation of the fuel cell will be associated with the location data of this HRS. The vehicle refuelling state can be traced by the tank state of charge CAN (Controller Area Network) signal on board the vehicle or a combination of tank pressure and temperature to calculate the tank state of charge. Based on this signal, it can be automatically defined if the vehicle has been refuelled: the tank state of charge of the new trip will be larger than at the end of the previous trip. If it is the case, the GPS location of the start of the new trip (i.e. location of the HRS where refuelling has been done) is automatically recorded.

Once the vehicle equipped with the fuel cell has been refuelled at a given HRS, the location data of the latter may be stored on board, for example in a memory associated with the controller, or sent outside the vehicle, e.g. to a distant entity where it may be stored. Recording and/or sending of the location may be triggered by the refuelling operation.

To be noted that HRS location data can be sent in subsequent step S6 or, alternatively, sent separately from collected operation data.

The Figure 3 method further comprises a step S5 of collecting current I data and associated voltage V data of the fuel cell during subsequent operation of the latter (called here current operation of the fuel cell or current trip for the vehicle), as well as the mileage data (ODO). Other data may also be envisaged as already explained above.

Operation data is associated with the geographical location of the last HRS where the vehicle has lastly refuelled with hydrogen so that, in case of an anomaly detected with hydrogen quality in relation with operation of the fuel cell further to this refuelling, the hydrogen supply location (HRS) is traceable. Such collected operation data is illustrated on the left-hand part of Figure 4 with data V, I and ODO collected from current operation of the FC.

The performance of the FC may be monitored during driving of the vehicle or current trip (or operation of the stationary system) through data collection, in particular by monitoring or tracking the current and voltage data as well as the mileage data of the FCEV continuously or on a periodical basis (data sampling is periodically performed, e.g. every second). Collected data may also be recorded regularly in the course of operation of the FCEV.

In a possible further step S6 (indicated in dashed lines on Figure 3) collected data is sent outside the FCEV, e.g. to an Internet cloud or a distant physical entity, for being subsequently processed.

Otherwise, collected data is processed inside the FCEV thanks to the above processing capabilities of the controller.

The Figure 3 method may further comprise a step S7 for comparing collected current I data and associated voltage V data (collected data points) with the above defined threshold or decision boundary defined at step S4 (ex: here -3σ; alternative thresholds of -2σ, -4σ etc. may be envisaged depending on the required accuracy) in order to judge or detect (step S8) whether the collected data obtained during the current operation of the fuel cell is representative of an anomaly in the operation of the fuel cell or of normal operation of the latter based on the established model (model learned with data from previous operation or trips).

The comparison step S7 may lead to detect an anomaly in the operation of the fuel cell (steps S8 and S9) when the collected data points (I, V) are located below the above threshold.

An anomaly has been detected when the behavior of the fuel cell (assessed or characterized by current, voltage and vehicle mileage) during operation of the latter, i.e. during a trip, or after a specified time interval or mileage, has been regarded to be diverting or abnormal with respect to the past normal behavior of the fuel cell for that vehicle (historical data).

Hydrogen impurities that are present in the hydrogen that has been fueled to the FCEV (low quality hydrogen) will result in a lower voltage output reached by the FC. Such an anomaly is detected through the described method. However, the origin of this anomaly cannot be determined based on the sole analysis of this FC behavior as will be seen subsequently. Determination of the origin of this anomaly will be possible when the same anomaly has been detected in connection with other FCEVs having refueled at the same HRS.

On the contrary, when the collected data points are located above the threshold, the comparison step S7 does not lead to an anomaly (steps S8 and S10).

For the same reasons as explained above, the data points recorded during this current monitoring phase and corresponding to low current data points (e.g. below 100A) and to warm-up mode are removed before carrying out the comparison step.

In the course of the comparison step S7 the amount of data points located above and below the -3σ threshold (decision boundary) are counted. Theoretically, if there is no anomaly, that is the behavior of the fuel cell during current operation is normal, then the collected data should correspond to the previously modelled polarization curve and 99.97% of all collected data points should lie above the threshold (or 0.03% should lie below).

However, in practice, in order to make the model more robust and to avoid false positives, the judgement threshold or decision boundary for detecting anomalous trips can be set to 90% (or data points below raise up to a 10% margin or cut off value). Thus, in practice, if there is no anomaly, then the collected data should correspond to the previously modelled polarization curve and 99.87% of all collected data points should lie above the threshold (or 0.13 % should lie below).

The 10% value (margin) can be tuned by the user in order to change the sensitivity and precision of the model. The principle of this margin (or second limit) is to avoid that the FC operation be flagged as anomalous (shift of the I-V curve) for a number of points that is not significant enough. Alternatively, the decision boundary (ex: -3σ threshold) could be adjusted differently (ex: -2σ

threshold) and the associated percentage of certainty could be used as the cut off value.

The above operations are illustrated in Figure 4 by the different boxes 32-38 where:

- the lower limit V (lower curve indicated by K*-σ in box 30) is subtracted from the actual value V (collected voltage data) and the result is compared with the value 0 (boxes 32 and 34);
- in case the comparison is positive, the point is summed in box 36 with the previous corresponding summed points (the point is a NG point that is located below the lower limit V in box 30);
- in case the comparison is negative, the point is summed in box 38 with the previous corresponding summed points (the point is a OK point that is located above the lower limit V in box 30).

The different collected data points (collected during the whole operation or trip) are processed as described above and the boxes 36 and 38 increment a sum of the corresponding NG and OK points respectively.

In the following box 40 a probability of anomaly, PROBA, is determined/calculated (per operation or trip) as a function of the results of boxes 36 and 38 as follows PROBA= NG/(NG+OK).

The result PROBA is entered into a comparator box 42 together with a threshold based on the above discussed decision boundary threshold f(K) allocated with a margin (ex: 10% as indicated above).

Depending on the result of comparator box 42, an anomaly is flagged (box 46) or not.

Figure 7 illustrates an example where 15 anomalous trips have been detected (above the probability threshold of 10%) and recorded for a given FCEV out of a number of trips in a period where poor hydrogen quality was knowingly fueled to the fuel cell of the FCEV.

The Figure 3 method may further comprise a step S11 of updating the modelled polarization curve of the fuel cell with the currently collected data, for instance after the trip has been achieved, so that the model of the fuel cell at this time is currently representative of the fuel cell behavior that takes into account the last operation or trip. Thus the model has learnt from the last operation of the fuel cell (last trip) and now integrates lastly collected data which therefore reflect the most recent fuel cell operation taking into account (and now integrating in the updated model) all the above-mentioned parameters (I, V, vehicle mileage and possible hours of operation, environment data, driving behavior etc.).

On the left side of Figure 3 several further possible steps of the method have been represented. These steps are performed when the detection method is performed in whole or in part by a mobile system, in particular a FCEV of which the FC uses hydrogen for its operation.

When an anomaly is detected at step S9 and same or similar anomaly is detected or has been detected in connection with other FCEVs having refuelled at the same HRS, then the origin of the anomaly can be attributed to a low hydrogen quality and flagged accordingly as illustrated in step S12 of Figure 3.

This identification of the origin of the anomaly is made possible thanks to a centralised system which collects different data resulting from operation of the above-mentioned FCEVs (including HRS location data), as will be subsequently explained, and can share anomaly-related information with the different FCEVs.

The Figure 3 method may then perform a further step S13 of transmitting signalling information indicating an anomaly in the operation of the fuel cell, here a low H2 quality, to a user of the FCEV and/or a distant entity including one or more other FCEVs. Information relating to anomalous hydrogen and any other defect can be automatically transmitted, e.g. to the vehicle dealer, the vehicle manufacturer, the HRS operator, the driver etc. Transmitted information may include the location of the HRS where the last refuelling has been done.

To be noted that step S13 can be directly performed after step S9 (indicated by a dashed line), when a FC operation anomaly has been detected and it is not yet known whether it originates in a low H2 quality or not.

Under these circumstances step S12 may be omitted and, for instance, possibly performed after step S13 in order to flag the detected anomaly once it has been identified, if any. Alternatively, such transmission of signalling information can be performed by the centralized system after collecting and analyzing data from the plurality of vehicles (HRS location data etc.) and detecting possible FC operation anomalies.

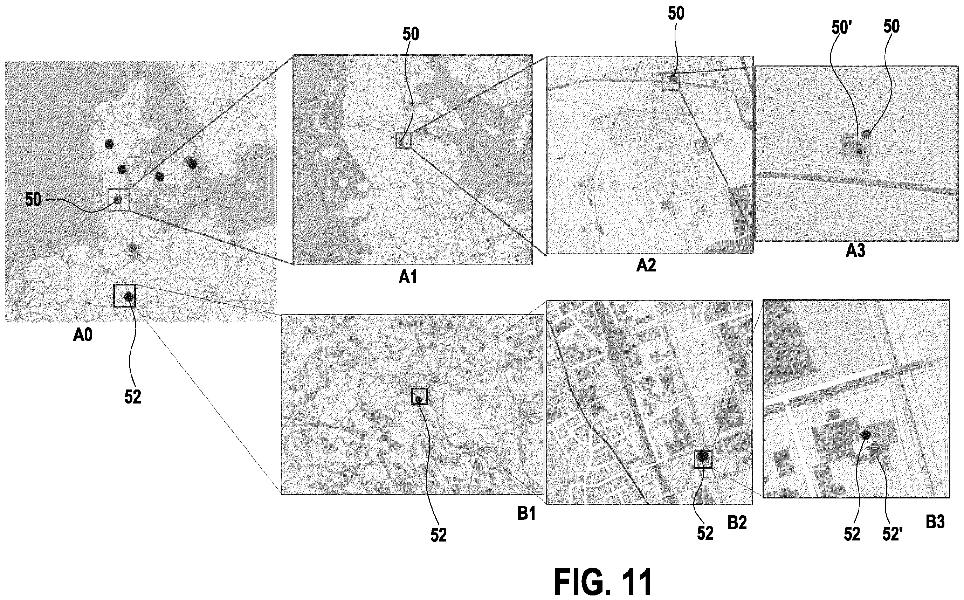

Once H2 low quality has been detected, the centralised system can locate on a map the HRS or HRSs at the origin of the quality issue as well as the associated H2 quality, e.g. through a visual display, label, sign, indicator (colour etc.) etc. The map can be that of above-mentioned Figure 8 where a rectangle next to the identification of each HRS is coloured in accordance with the anomaly (dark) or absence of anomaly (light) (alternatively, the map of Figure 11 may be used). Alternatively, the whole pictogram of the HRS may be coloured in red (for indicating an anomaly) or in green (absence of anomaly). In this example, HRS4 has been detected and reported by several vehicles as delivering low H2 quality. Other possible data visualization will be described subsequently.

Alternatively, no centralized system is involved and the different FCEVs share their collected data so that each FCEV is informed when one or more FCEVs detect an anomaly and the detected anomaly is linked with the same HRS (ex: through step S13). Then, thanks to this shared information each FCEV is capable of determining that the detected anomaly originates in the quality of hydrogen supplied at a given HRS. In this case step S13 may be performed with a view to informing the other FCEVs with which information was shared.

Figure 9 represents an algorithm of a method for assessing the quality of hydrogen supplied at a first plurality of HRSs, HRS1-HRSn, to a second plurality of FCEVs. This method may be performed in a centralized manner, e.g. in a server (distant entity as entity 20 in Figure 2) which possesses the processing and memory capacities for performing/implementing (or is configured to perform/implement the different steps of) this method.

The assessment method starts with a first step S20 during which data relating to operation of a FCEV after refuelling is sent by the latter and collected by the centralised system. Such collection step may be spread over time and, for example, may take place every time a FCEV sends operation data. For example, operation data can be received when operation is achieved (ex: at the end of the trip) or in the course of operation, e.g. on a regular basis. Such collection step may be spread over time and, for example, may take place every time a FCEV sends HRS location data (when refuelling). During this collection step HRS location data of the station at which the FCEV has lastly refuelled is sent by the latter in connection with data operation.

HRS location data may be obtained as explained above in connection with Figure 3 algorithm.

The above steps are performed for different FCEVs having refuelled at several HRSs, some of them being the same for more than one vehicle.

Visualisation of HRS location data may be performed after receiving such data or later on. Visualisation of HRSs coordinates can be made in a dashboard or on a map such as that represented in Figure 8 or Figure 11 as will be described later on.

The Figure 9 method may include a test step S22, the purpose of which is to detect a possible anomaly during operation of the fuel cell in each FCEV among the plurality of FCEVs for which operation data has been received.

Performing this step requires that operation data collected by each FCEV be analysed as explained above with reference to Figure 3 algorithm in steps S7 and S8 (anomaly detection).

In case an anomaly is detected in connection with a first FCEV, step S22 is followed by a second test step S24 in the course of which it is checked whether another anomaly has been detected in connection with one or more other FCEVs having refuelled at the same HRS as the first FCEV.

In the affirmative, it can be concluded that the anomaly detected further to operation of several FCEVs having refuelled at the same HRS is linked with a low H2 quality issue as indicated at following step S26. Indication of this low quality may be associated with the HRS of concern and is recorded or stored at step S28 (e.g. in a data base).

In the negative, it can be concluded that the anomaly detected further to operation of several FCEVs having refuelled at the same HRS is not linked with a low H2 quality issue but with another anomaly as indicated at following step S30 (ex: in case only the trips accomplished by one vehicle are detected as anomalous, while operation of other vehicles is assessed by the anomaly model to be in line with the 'normal' behaviour (as represented by the model based on the past data), then it is likely that the anomaly is caused by a defect which is not impure hydrogen). Indication that hydrogen supplied by the HRS of concern has not been detected as raising any issue may be associated with this HRS and is recorded at step S28. Indication that another anomaly has been detected in connection with operation of several FCEVs may also be associated with each FCEV of concern and recorded at step S28.

Reverting to first test step S22, if no anomaly has been detected during operation of the fuel cell in each FCEV, then this step is followed by recording step S28 in the course of which such indication may be associated with each FCEV and recorded.

The Figure 9 method may include a further step S32 of visualising the results of the above described anomaly detection process in a dashboard and/or on a map such as represented in Figure 8 or Figures 11 and 12 as will be described subsequently. On the Figure 8 map a visual display representative of the H2 quality dispensed at each HRS may appear next to the latter, e.g. in accordance with a predetermined scheme or code. For example, HRS4 which has been identified as delivering hydrogen with low quality may be allocated a predetermined sign or colour next to its location on the map, here a dark rectangle, whereas the other stations which have not been identified as delivering low quality hydrogen may be allocated another predetermined sign or colour next to their locations on the map, here a white rectangle. Being aware of anomalies that are not linked to H2 quality (e.g. through the dashboard and/or map) can be of interest for the dealer and/or vehicle manufacturer in order to further investigate these singularities.

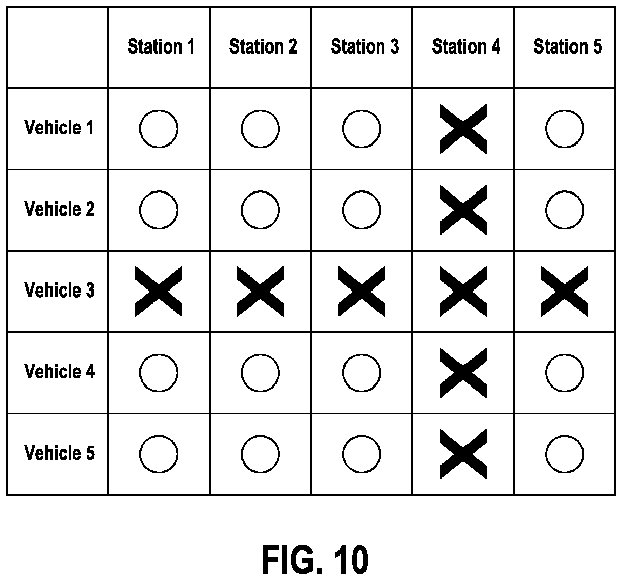

Figure 10 represents an example of results displayed in a table where operation data of five vehicles 1 to 5 were collected and analyzed together with five stations HRSs 1 to 5 at which each vehicle has refuelled. The crosses indicate an anomaly whereas the circles indicate no anomaly. The results illustrate here that:

- as vehicle 3 has refuelled at the different HRSs and anomalies have been detected in each case while the other vehicles that have also refuelled at these HRSs are showing normal behaviour, it can be concluded that vehicle 3's FC has an anomaly that is not related to H2 fuel but to the FC itself or the mobile system itself;
- as all the other vehicles 1, 2, 4 and 5 have reported having refuelled at the same HRS (Station 4) and the analysis of their operation data has revealed a significant shift in the curve I-V of each FC, this leads to detecting a low H2 quality anomaly. However, the result of the vehicle 3 anomaly detection in connection with HRS4 cannot be used in the judgment/determination that there is a H2 quality issue with HRS4 given its results in connection with the other HRSs.

It is to be noted that different number of vehicles and stations can be involved in the anomaly detection and H2 quality assessment. Judgment/determination that a low H2 quality is assessed in relation with an HRS may be based on anomalies detected by two or more vehicles for the same HRS. If one vehicle does not detect an anomaly with the station whereas others do, it may not be judged/determined that there is a H2 quality issue with this station.

A dashboard may contain further information, in particular information linking vehicles with detected anomalies or absence of detected anomalies, etc.

The Figure 9 method may include a last step S34 (as step S13 of Figure 3) of transmitting information including an indication of an anomaly or of the absence of anomaly in the operation of the fuel cell of one or more FCEVs, e.g. an indication of H2 quality issue or of no H2 quality issue in connection with a given HRS. Such information may be transmitted to the concerned FCEVs, in particular to their users (drivers), and/or to other entities such as the vehicle dealer, the vehicle manufacturer, the HRS operator, etc. The concerned drivers may be informed automatically, i.e. without any human intervention, e.g. by malfunction indicator light or by a dashboard message.

Such transmitted information and/or the dashboard and/or the map can inform all the vehicles (FCEVs) connected to this system of the poor H2 quality supplied by an HRS.

In a general manner, the mapping that has thus been made of HRSs with their data location (GPS coordinates) and associated H2 quality may be shared with potential users/customers in search of an HRS for refuelling their vehicle to inform them of the HRSs to avoid and those to select. This mapping is regularly updated so that recent useful information is available.

The method also enables tracking of historical data of the HRSs in order to trace the evolution of the HRSs performance over time. Such data is stored in a database and can be included in a dashboard.

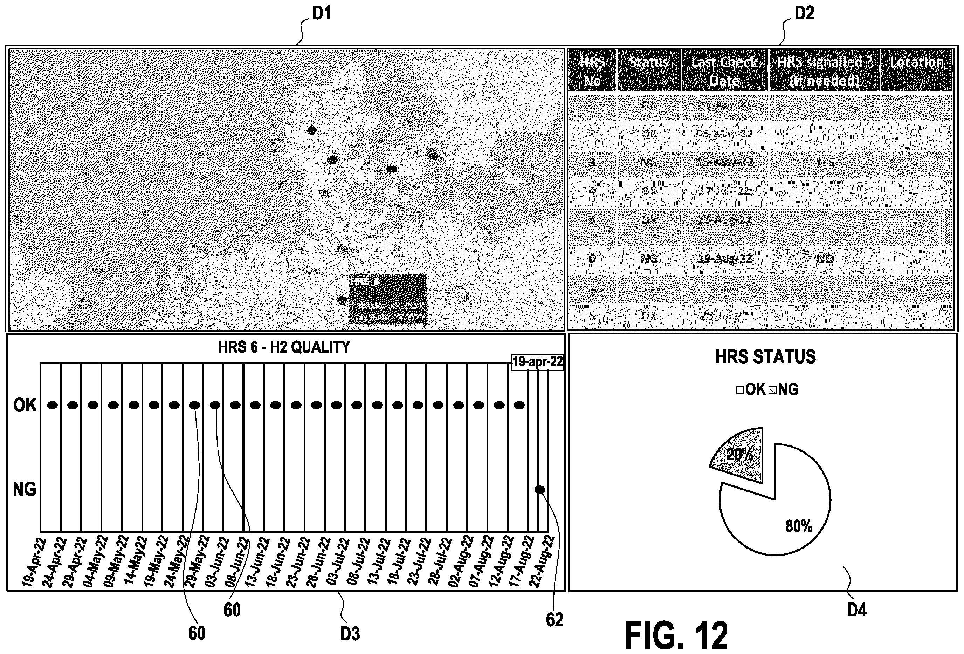

Figures 11 and 12 illustrate different possible data visualization.

Figure 11 represents a first general map of geographical countries showing several HRSs thereon represented each by a circle, the colour of which indicates the H2 quality supplied at the HRS. Two HRSs 50 and 52 identified by circles are selected and surrounded each by a rectangle having the same colour as the circle. Several successive screens A1-A3 show successive enlarged views corresponding each to the rectangle of the previous screen, starting with the first rectangle appearing on the first general map (screen A0) and encircling station 50 (coloured in green) The last screen A3 represents the most detailed map (obtained through the successive zoom in operations performed from original screen A0) where the coloured point 50 is located next to the pictogram on the map representing the corresponding HRS 50', e.g. a few meters away (point 50 is part of the refuelling station within the meaning of this representation). This HRS has been reported as an 'OK' HRS, thereby meaning that H2 supplied by this station is of good/high quality (or at least is not of low quality) according to the standard of H2 quality. Figure 11 is an example of H2 quality map that can be achieved from the performance of an anomaly detection method of the present disclosure for each of several mobile systems and the performance of a H2 quality assessment method of the present disclosure for these mobile systems.

On the contrary, station 52 represented in red and encircled by a rectangle of the same colour on screen A0 is successively enlarged through several successive screens B1-B3, as for station 50 with zoom in screens A1-A3, to lead to last most detailed screen B3 where the coloured point 52 is located next to the pictogram on the map representing the corresponding HRS 52', e.g. a few meters away (point 52 is part of the refuelling station within the meaning of this representation). This HRS has been reported as an 'NG' HRS, thereby meaning that H2 supplied by this station is of bad/low quality according to the current standard of H2 quality.

Figure 12 shows other data visualisation in the form of a dashboard where several adjacent screens illustrate each several types of information:

- D1 is a general map, as A0 in Figure 11, where several HRSs are positioned and data location (ex: GPS coordinates) of each HRS can be displayed on the map, next to the circle identifying the corresponding HRS, upon selection of the station by a user (through a mouse and its associated cursor, a keyboard, etc.);
- D2 located to the right end of D1 shows a table with several lines indicating the different HRSs listed, e.g. on the map D1, and several columns providing each, for a given HRS, different types of information: its status in terms of H2 quality (OK or NG), the last check date when H2 quality has been assessed, any possible signalling of this station with respect to its low H2 quality ("HRS signalled (if needed)") and the HRS location (GPS coordinates);
- D3 located below D1 represents the evolution vs. time of H2 quality provided by the station HRS_6 (that is selected on D1); here the quality is represented for specific days (over a long period) where the quality has been assessed and identified by an upper dot 60 (coloured or not) when the status is 'OK' and a lower dot 62 (coloured or not) when the status is 'NG';
- D4 represents the ratio (in percentages) of 'OK' and 'NG' status for the HRSs that are currently being screened. The NG part of the pie is highlighted because HRS_6 belongs to that fraction of NG HRS (based on the previous screens D1 to D3).

In a general manner, historical data tracking may be envisaged based on recorded analysis results with respect to anomaly detection connected to H2 quality or not. D3 provides an example of historical data tracking per HRS where the result is traceable in time. Such historical tracking may also be built per vehicle and for example for each vehicle among a plurality of vehicles. Other dashboards or representations for historical data tracking may be envisaged. Overall, an easy visualization of the recorded analysis results, e.g. the status of HRSs performance can be obtained through dashboards and/or maps that can take various forms departing from those illustrated.

Reverting to Figure 9 algorithm, it is to be noted that data collected at step S20 may be recorded or stored (e.g. in a data base) as in step S28 for the results of anomaly detection. Storing the data relating to the location of the HRSs and the anomaly detection results makes it possible to subsequently determine that a detected anomaly is due to poor H2 quality. Such an anomaly can be flagged by the centralised system performing the Figure 9 method and/or it can also be flagged by the concerned FCEVs.

The above Figure 10 method is performed dynamically so that the results of its performance are regularly refreshed and representative of an actual situation.

This method makes it possible to identify non-declared/registered or non-official HRSs as the above-described process is based on actual use according to which a FCEV can refuel at any available HRS found on its way.

## Claims

1. A method for detecting a possible anomaly in the operation of a fuel cell (FC) as a power source of a mobile or stationary system (10; 10'), the fuel cell (FC) being configured to generate a current (I) and a voltage (V) that are linked through a polarization curve (I-V), wherein the method comprises:

- collecting (S5, S20) current (I) data and associated voltage (V) data of the fuel cell during current operation of the fuel cell corresponding to a current period of time,

- comparing (S7, S22) currently collected current (I) data and associated voltage (V) data with a threshold (T;K*-$\sigma$; K*+$\sigma$) that has been previously obtained through using a machine learning algorithm together with current (I) data and associated voltage (V) data collected during previous operation of the fuel cell corresponding to a previous period of time, the machine learning algorithm outputting both (i) a modelled polarization curve (I-V) representing a mean (MrI) of data points (I,V) corresponding to previously collected current (I) data and associated voltage (V) data and (ii) a variance ($\sigma^2$) of the voltage for a given current based on these data points (I,V), the threshold depending on said variance,

- detecting (S8, S22) a possible anomaly in the operation of the fuel cell depending on the result of the comparison (S7, S22).

2. The method of claim 1, wherein the threshold (T; K*-$\sigma$; K*+$\sigma$) is proportional to the variance ($\sigma^2$).

3. The method of claim 1 or 2, wherein the modelled polarization curve (I-V) of the fuel cell is updated (S11) based on the currently collected current (I) data and associated voltage (V) data collected during current operation of the fuel cell.

4. The method of any one of claims 1 to 3, wherein the machine learning algorithm is based on a mathematical model that is selected among the following: a linear regression model, a multi-variate linear regression model a polynomial model, a logarithmic model, a generalized linear model.

5. The method of claim 4, wherein the machine learning algorithm being based on a mathematical model involving unknown parameters, a Bayesian Statistical Inference method together with a computational method are used to determine the unknown parameters of the model.

6. The method of any one of claims 1 to 5, wherein the method further comprises collecting (S5, S20) at least one other parameter for modelling a polarization curve (I-V) of the fuel cell, said at least one other parameter being selected among the following: a duration of operation of the fuel cell, a lifetime of the system, an amount of energy produced, environmental properties such as temperature of the air, air relative humidity, air quality, behaviour of a user of the system including the fuel cell based on operation of the fuel cell over time

7. The method of any one of claims 1 to 6, wherein when the fuel cell is a power source of a mobile system (10), the method further comprises collecting mileage data (ODO) of the mobile system during operation of the latter and modelling a polarization curve (I-V) of the fuel cell further uses collected mileage of the mobile system.

8. The method of any one of claims 1 to 7, wherein the collected current (I) data and associated voltage (V) data of the fuel cell are those collected during operation of the fuel cell of the mobile system (10) after the last refuelling of the fuel cell with hydrogen (H2) at a given hydrogen refuelling station (HRS), the collected current (I) data and associated voltage (V) data of the fuel cell being related to the given HRS.

9. The method of claim 8, wherein the collected current (I) data and associated voltage (V) data of the fuel cell are further related to a geographical location of the given HRS.

10. The method of any one of claims 7 to 9, wherein the method further comprises transmitting signalling information (S13, S34) indicating an anomaly in the operation of the fuel cell of the mobile system to a user of the mobile system and/or a distant entity.

11. A method for assessing the quality of hydrogen (H2) supplied at a given hydrogen refuelling station (HRS) to a plurality of mobile systems (FCEVs), wherein the method comprises applying the detection method of any one of claims 1 to 10 to each of the plurality of mobile systems, each of the plurality of mobile systems having refuelled with H2 at the given HRS.

12. The method of claim 11, wherein when the detecting method applied to each mobile system leads to detecting an anomaly (S8-S9, S22-S24-S26) in the operation of the fuel cell of the mobile system after the latter has refuelled with H2 at the given HRS, then the detected anomaly is representative of an H2 quality issue associated with the given HRS.

13. The method of claim 11 or 12, wherein it further comprises locating on a map the given HRS with the associated H2 quality issue when applying the detection method of claim 9.

14. A method for assessing the quality of hydrogen (H2) supplied at a first plurality of hydrogen refuelling stations (HRSs) to a second plurality of mobile systems (FCEVs), wherein the method comprises applying the detection method of any one of claims 1 to 10 to each of the second plurality of mobile systems, each of the second plurality of mobile systems having refuelled with H2 at one or more of the first plurality of HRSs.

15. The method of claim 14, wherein the detecting method applied to each mobile system leads to detecting an anomaly (S8-S9, S24-S26) or not (S8-S10, S22) in the operation of the fuel cell of the mobile system after the latter has refuelled with H2 at an HRS of the second plurality of mobile systems, depending on the result of the comparison.

16. The method of claim 15, wherein when the detecting method applied to two or more of the second plurality of mobile systems leads to detecting an anomaly (S8-S9, S24-S26) in the operation of the fuel cell of each mobile system after each of them has refuelled with H2 at the same HRS, then the detected anomaly is representative of an H2 quality issue associated with this HRS.

17. The method of claim 15 or 16, wherein when the detecting method applied to a given mobile system of the second plurality of mobile systems that has refuelled with H2 at all the HRSs of the first plurality of HRSs leads to detecting an anomaly (S8-S10, S22) in the operation of the fuel cell of the given mobile system, then it can be determined that the anomaly detected in the operation of the fuel cell of the given mobile system relates either to the fuel cell itself or to the given mobile system itself and not to an H2 quality issue.

18. The method of claim 16 or 17, wherein, when applying the detection method of claim 9, the assessment method further comprises locating on a map each HRS of the first plurality of HRSs with for each of them an indication of an H2 quality issue or an indication of no H2 quality issue.

19. The method of any one of claims 16 to 18, wherein it further comprises transmitting signalling information (S13, S34) including an indication of an H2 quality issue or an indication of no H2 quality issue for one or more HRSs of the first plurality of HRSs.

20. A system for implementing in whole or in part the method of any one of claims 1 to 19.

21. A mobile or stationary system comprising the system of claim 20 when the latter implements the method of any one of claims 1 to 10.

**Amended claims in accordance with Rule 137(2) EPC.**

1. A method for detecting a possible anomaly in the operation of a fuel cell (FC) as a power source of a mobile or stationary system (10; 10'), the fuel cell (FC) being configured to generate a current (I) and a voltage (V) that are linked through a polarization curve (I-V), wherein the method comprises:

    - collecting (S5, S20) current (I) data and associated voltage (V) data of the fuel cell during current operation of the fuel cell corresponding to a current period of time,

    - comparing (S7, S22) currently collected current (I) data and associated voltage (V) data with a threshold (T;K*-σ; K*+σ ) that has been previously obtained through using a machine learning algorithm together with current (I) data and associated voltage (V)

data collected during previous operation of the fuel cell corresponding to a previous period of time, the machine learning algorithm outputting both (i) a modelled polarization curve (I-V) representing a mean (MrI) of data points (I,V) corresponding to previously collected current (I) data and associated voltage (V) data and (ii) a variance ($\sigma^2$) of the voltage for a given current based on these data points (I,V), the threshold depending on said variance,

    - detecting (S8, S22) a possible anomaly in the operation of the fuel cell depending on the result of the comparison (S7, S22).

2. The method of claim 1, wherein the threshold (T; K*-σ; K*+σ) is proportional to the variance ($\sigma^2$).

3. The method of claim 1 or 2, wherein the modelled polarization curve (I-V) of the fuel cell is updated (S11) based on the currently collected current (I) data and associated voltage (V) data collected during current operation of the fuel cell.

4. The method of any one of claims 1 to 3, wherein the machine learning algorithm is based on a mathematical model that is selected among the following: a linear regression model, a multi-variate linear regression model a polynomial model, a logarithmic model, a generalized linear model.

5. The method of claim 4, wherein the machine learning algorithm being based on a mathematical model involving unknown parameters, a Bayesian Statistical Inference method together with a computational method are used to determine the unknown parameters of the model.

6. The method of any one of claims 1 to 5, wherein the method further comprises collecting (S5, S20) at least one other parameter for modelling a polarization curve (I-V) of the fuel cell, said at least one other parameter being selected among the following: a duration of operation of the fuel cell, a lifetime of the system, an amount of energy produced, environmental properties such as temperature of the air, air relative humidity, air quality, behaviour of a user of the system including the fuel cell based on operation of the fuel cell over time

7. The method of any one of claims 1 to 6, wherein when the fuel cell is a power source of a mobile system (10), the method further comprises collecting mileage data (ODO) of the mobile system during operation of the latter and modelling a polarization curve (I-V) of the fuel cell further uses collected mileage of the mobile system.

8. The method of any one of claims 1 to 7, wherein the collected current (I) data and associated voltage (V) data of the fuel cell are those collected during operation of the fuel cell of the mobile system (10) after the last refuelling of the fuel cell with hydrogen (H2) at a given hydrogen refuelling station (HRS), the collected current (I) data and associated voltage (V) data of the fuel cell being related to the given HRS.

9. The method of claim 8, wherein the collected current (I) data and associated voltage (V) data of the fuel cell are further related to a geographical location of the given HRS.

10. The method of any one of claims 7 to 9, wherein the method further comprises transmitting signalling information (S13, S34) indicating an anomaly in the operation of the fuel cell of the mobile system to a user of the mobile system and/or a distant entity.

11. A method for assessing the quality of hydrogen (H2) supplied at a given hydrogen refuelling station (HRS) to a plurality of mobile systems (FCEVs), wherein the method comprises applying the detection method of any one of claims 1 to 10 to each of the plurality of mobile systems, each of the plurality of mobile systems having refuelled with H2 at the given HRS.

12. The method of claim 11, wherein when the detecting method applied to each mobile system leads to detecting an anomaly (S8-S9, S22-S24-S26) in the operation of the fuel cell of the mobile system after the latter has refuelled with H2 at the given HRS, then the detected anomaly is representative of an H2 quality issue associated with the given HRS.

13. The method of claim 11 or 12, wherein it further comprises locating on a map the given HRS with the associated H2 quality issue when applying the detection method of claim 9.

14. A method for assessing the quality of hydrogen (H2) supplied at a first plurality of hydrogen refuelling stations (HRSs) to a second plurality of mobile systems (FCEVs), wherein the method comprises applying the detection method of any one of claims 1 to 10 to each of the second plurality of mobile systems, each of the second plurality of mobile systems having refuelled with H2 at one or more of the first plurality of HRSs.

15. The method of claim 14, wherein the detecting method applied to each mobile system leads to detecting an anomaly (S8-S9, S24-S26) or not (S8-S10, S22) in the operation of the fuel cell of the mobile system after the latter has refuelled with H2 at an HRS of the second plurality of mobile systems, depending on the result of the comparison.

16. The method of claim 15, wherein when the detecting method applied to two or more of the second plurality of mobile systems leads to detecting an anomaly (S8-S9, S24-S26) in the operation of the fuel cell of each mobile system after each of them has refuelled with H2 at the same HRS, then the detected anomaly is representative of an H2 quality issue associated with this HRS.

17. The method of claim 15 or 16, wherein when the detecting method applied to a given mobile system of the second plurality of mobile systems that has refuelled with H2 at all the HRSs of the first plurality of HRSs leads to detecting an anomaly (S8-S10, S22) in the operation of the fuel cell of the given mobile system, then it can be determined that the anomaly detected in the operation of the fuel cell of the given mobile system relates either to the fuel cell itself or to the given mobile system itself and not to an H2 quality issue.

18. The method of claim 16 or 17, wherein, when applying the detection method of claim 9, the assessment method further comprises locating on a map each HRS of the first plurality of HRSs with for each of them an indication of an H2 quality issue or an indication of no H2 quality issue.

19. The method of any one of claims 16 to 18, wherein it further comprises transmitting signalling information (S13, S34) including an indication of an H2 quality issue or an indication of no H2 quality issue for one or more HRSs of the first plurality of HRSs.

20. A system comprising a controller (16) configured to implement in whole or in part the method of any one of claims 1 to 19.

21. A mobile or stationary system comprising the system of claim 20 when the latter implements the method of any one of claims 1 to 10.

FC voltage (V)

FC current (A)

## FIG. 1A

FC voltage (V)

FC current (A)

## FIG. 1B

14

12

12a

12b

16

20

10

OR

10'

## FIG. 2

Collecting data ( I, V, ODO ... ) — S1

Sending data — S2

Modelling I-V — S3

Decision boundary — S4

Collecting current data — S5

Sending data — S6

Comparing — S7

Detecting anomaly ? — S8

S12

Low H Quality ← Anomaly — S9    No anomaly — S10

Transmitting signalling information — S13    Updating the model — S11

# FIG. 3

FIG. 4

EP 4 095 957 A1

FIG. 5A

FIG. 5B

EP 4 095 957 A1

**FIG. 6**

**FIG. 7**

HRS1☐

HRS2☐

HRS3☐

HRS4■

• • • • •

HRSn☐

## FIG. 8

Collecting FCEVs operation data —S20

S22— Detecting anomaly ? — N

Y

S24— Same HRS for several FCEVs ? — N

Y

S26— H2 anomaly

S30 Other anomaly

S28— Recording

S32— Visualization

S34— Transmitting information

## FIG. 9

|  | Station 1 | Station 2 | Station 3 | Station 4 | Station 5 |
|---|---|---|---|---|---|
| Vehicle 1 | ◯ | ◯ | ◯ | ✕ | ◯ |
| Vehicle 2 | ◯ | ◯ | ◯ | ✕ | ◯ |
| Vehicle 3 | ✕ | ✕ | ✕ | ✕ | ✕ |
| Vehicle 4 | ◯ | ◯ | ◯ | ✕ | ◯ |
| Vehicle 5 | ◯ | ◯ | ◯ | ✕ | ◯ |

# FIG. 10

FIG. 11

EP 4 095 957 A1

FIG. 12

**D1**

**D2**

| HRS No | Status | Last Check Date | HRS signalled ? (If needed) | Location |
|---|---|---|---|---|
| 1 | OK | 25-Apr-22 | - | ... |
| 2 | OK | 05-May-22 | - | ... |
| 3 | NG | 15-May-22 | YES | ... |
| 4 | OK | 17-Jun-22 | - | ... |
| 5 | OK | 23-Aug-22 | - | ... |
| 6 | NG | 19-Aug-22 | NO | ... |
| ... | ... | ... | ... | ... |
| N | OK | 23-Jul-22 | - | ... |

HRS_6
Latitude= xx.xxxx
Longitude= yy.yyyy

**HRS 6 - H2 QUALITY**

19-apr-22

OK

NG

60
60
60
D3
62

**HRS STATUS**

☐OK ☑NG

20%

80%

**D4**

EP 4 095 957 A1

Europäisches
Patentamt

European
Patent Office

Office européen
des brevets

# EUROPEAN SEARCH REPORT

Application Number

EP 21 30 5708

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/002279 A1 (DWYER WILLIAM J [US] ET AL) 3 January 2019 (2019-01-03) | 20,21 | INV. H01M8/04298 |
| Y | * paragraphs [0010], [0020] – paragraph [0024] * | 1-19 | H01M8/04537 H01M8/04664 H01M8/04992 |
| X | US 6 847 188 B2 (GEN MOTORS CORP [US]) 25 January 2005 (2005-01-25) | 20,21 | ADD. |
| Y | * column 2, line 50 – column 3, line 29 * * column 3, line 59 – line 67 * * column 9, line 49 – line 67 * | 1-19 | H01M8/0432 |

TECHNICAL FIELDS
SEARCHED      (IPC)

H01M

The present search report has been drawn up for all claims

| Place of search | Date of completion of the search | Examiner |
|---|---|---|
| Munich | 13 January 2022 | Topalov, Angel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 30 5708

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2022

| Patent document cited in search report | | Publication date | Patent family member(s) | | Publication date |
|---|---|---|---|---|---|
| US 2019002279 | A1 | 03-01-2019 | CN | 109216737 A | 15-01-2019 |
| | | | DE 102018115520 A1 | | 03-01-2019 |
| | | | US | 2019002279 A1 | 03-01-2019 |
| US 6847188 | B2 | 25-01-2005 | CA | 2309025 A1 | 06-01-2001 |
| | | | EP | 1069636 A2 | 17-01-2001 |
| | | | JP | 3739635 B2 | 25-01-2006 |
| | | | JP | 2001043880 A | 16-02-2001 |
| | | | US | 2002051899 A1 | 02-05-2002 |
| | | | US | 2004151955 A1 | 05-08-2004 |

EPO FORM P0459

For more details about this annex : see Official Journal of the European Patent Office, No. 12/82

**EP 4 095 957 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1069636 B1